# EUROPEAN PATENT SPECIFICATION

(11) **EP 4 394 598 B1**
(45) Date of publication and mention of the grant of the patent: **03.12.2025**
(21) Application number: 23198126.7
(22) Date of filing: 19.09.2023
(51) Int. Cl.: G06F 11/34, G06F 9/50, G06F 12/02, G06F 12/0811, G06F 12/084, G06F 12/0842

(54) **REGION-AWARE MEMORY BANDWIDTH ALLOCATION CONTROL**
BEREICHSBEWUSSTE SPEICHERBANDBREITENZUWEISUNGSSTEUERUNG
COMMANDE D'ATTRIBUTION DE BANDE PASSANTE DE MÉMOIRE SENSIBLE À UNE RÉGION

(30) Priority: 29.12.2022 US 202263435971 P; 31.03.2023 US 202318194408
(43) Date of publication of application: 03.07.2024
(73) Proprietor: Intel Corporation, Santa Clara, CA 95054 (US)
(72) Inventor: Herdrich, Andrew J., Hillsboro, 97124 (US); Abraham, Philip, Beaverton, 97006 (US); Autee, Priya, Chandler, 85248 (US); Van Doren, Stephen, Portland, 97229 (US); Liu, Yen-Cheng, Portland, 97229 (US); Sankaran, Rajesh, Portland, 97229 (US); Subramaniam, Kameswar, Austin, 78750 (US); Parikh, Ritesh, San Jose, 95118 (US)
(74) Representative: Goddar, Heinz J.

(56) References cited:
- EP-A1- 4 064 048
- US-A1- 2021 042 228

## Description

### BACKGROUND

Processor cores in multicore processors may use shared system resources such as caches (e.g., a last level cache or LLC), system memory, input/output (I/O) devices, and interconnects. The quality of service provided to applications may be degraded and/or unpredictable due to contention for these or other shared resources. Some processors include technologies, such as Resource Director Technology (RDT) from Intel Corporation, that enable visibility into and/or control over how shared resources such as LLC and memory bandwidth are being used. Such technologies may be useful, for example, for controlling applications that may be over-utilizing memory bandwidth relative to their priority.
US 2021/042228 A1 describes a system that includes at least one processor; a cache; a memory; an interface to copy data from a received packet to the memory or the at least one cache; and controller to manage use of at least one region of the cache. In some examples, the controller is to: indicate availability of a cache region reservation feature; receive a request to reserve a region of the cache from a requester; and based on the requested region being permitted to be reserved by the requester, solely allow the requester to write data to at least a portion of the reserved region. In some examples, the controller is to write to a register to indicate availability of a cache region reservation feature. In some examples, the request to reserve a region of the cache from a requester comprises a specification of a number of sets, a number of ways, and a class of service.
The invention is set forth in the independent claims. Embodiments of the invention are described in the dependent claims.

### BRIEF DESCRIPTION OF DRAWINGS

Various examples in accordance with the present disclosure will be described with reference to the drawings, in which:
FIG. 1 illustrates a configuration of hardware for region-aware memory bandwidth allocation control according to an embodiment.
FIG. 2 illustrates a rate control loop, including a leaky bucket counter, for region-aware memory bandwidth allocation control according to an embodiment.
FIG. 3 illustrates a rate control loop, including a leaky bucket counter, for region-aware memory bandwidth allocation control according to an embodiment.
FIG. 4 shows a linear relationship between a leaky bucket leak rate and a bandwidth control window according to an embodiment.
FIG. 5 shows an implementation with a linear rate meter according to an embodiment.
FIG. 6 illustrates a processor for region-aware memory bandwidth allocation control according to an embodiment.
FIG. 7 illustrates a method for region aware memory bandwidth allocation control according to an embodiment.
FIG. 8 illustrates an example usage model for region-aware memory bandwidth allocation control according to an embodiment.
FIG. 9 illustrates a processor for cache allocation technology support for non-contiguous and asymmetric cache capacity bitmasks according to an embodiment.
FIG. 10 illustrates layouts cache capacity bitmasks according to an embodiment.
FIG. 11 illustrates a method for cache allocation technology support for non-contiguous and asymmetric cache capacity bitmasks.
FIG. 12 illustrates an example computing system.
FIG. 13 illustrates a block diagram of an example processor and/or System on a Chip (SoC) that may have one or more cores and an integrated memory controller.
FIG. 14(A) is a block diagram illustrating both an example in-order pipeline and an example register renaming, out-of-order issue/execution pipeline according to examples.
FIG. 14(B) is a block diagram illustrating both an example in-order architecture core and an example register renaming, out-of-order issue/execution architecture core to be included in a processor according to examples.
FIG. 15 illustrates examples of execution unit(s) circuitry.
FIG. 16 is a block diagram illustrating the use of a software instruction converter to convert binary instructions in a source instruction set architecture to binary instructions in a target instruction set architecture according to examples.

### DETAILED DESCRIPTION

The present disclosure relates to methods, apparatus, systems, and non-transitory computer-readable storage media for region-aware memory bandwidth allocation control. According to some examples, an apparatus includes a processing core and control circuitry. The processing core is to execute a plurality of threads. The control circuitry is to control use of memory bandwidth per memory region and per thread.

As mentioned in the background section, a processor may include technologies, such as Resource Director Technology (RDT) from Intel Corporation, that enable visibility into and/or control over how shared resources such as LLC and memory bandwidth are being used. Aspects, implementations, and/or techniques related to such technologies that relate to monitoring, measuring, estimating, tracking, etc. memory bandwidth use may be referred to as "memory bandwidth monitoring" or "MBM" (which may also be used to refer to a memory bandwidth monitor, hardware/firmware/software to perform memory bandwidth monitoring, etc.), however, embodiments are not limited by the use of that term. Aspects, implementations, and/or techniques related to such technologies that relate to allocating, limiting, throttling, providing availability of, etc. memory bandwidth may be referred to as "memory bandwidth allocation" or "MBA" (which may also be used to refer to a quantity of memory bandwidth allocated, provided available, to be allocated, etc.) however, embodiments are not limited by the use of that term.

In embodiments, MBM and/or MBA may be used to monitor and/or allocate memory bandwidth on a regional, piecewise, granular, etc. basis. For example, a memory space (e.g., one or more physical, linear, virtual, etc. memory ranges and/or one or more memory types, devices, resources, etc.) may be divided into multiple regions, address spaces, areas, types, resources, etc. (to be referred to generally as regions). Usage per region and/or of any one or more regions may be monitored and/or measured, and/or allocation per region and/or of any one or more regions may be targeted, controlled, performed, etc. In embodiments, such region-aware MBM and/or MBA may be indirect or approximate. Embodiments may include control circuits, circuitry, hardware, logic, etc. that establish, are aware of, differentiate between, etc. and/or may be configured (e.g., by firmware or software) to establish, be made aware of, differentiate between, etc. various regions of a memory space for purposes of MBM and/or MBA.

Therefore, different amounts of different regions of memory (or other resource) may be allocated to different physical cores, logical cores, threads, applications, etc., thus providing for more fine-grained control and/or allocation of shared resources than may be possible according to an existing approach. For example, in contrast to a prior approach that treats all memory as one generic instance and there is no distinction between different memory regions or types of memory, embodiments provide for separate types and/or regions of memory to have their bandwidth monitored and/or allocated. Embodiments may provide for MBM and/or MBA control per thread/core and per memory region/resource.

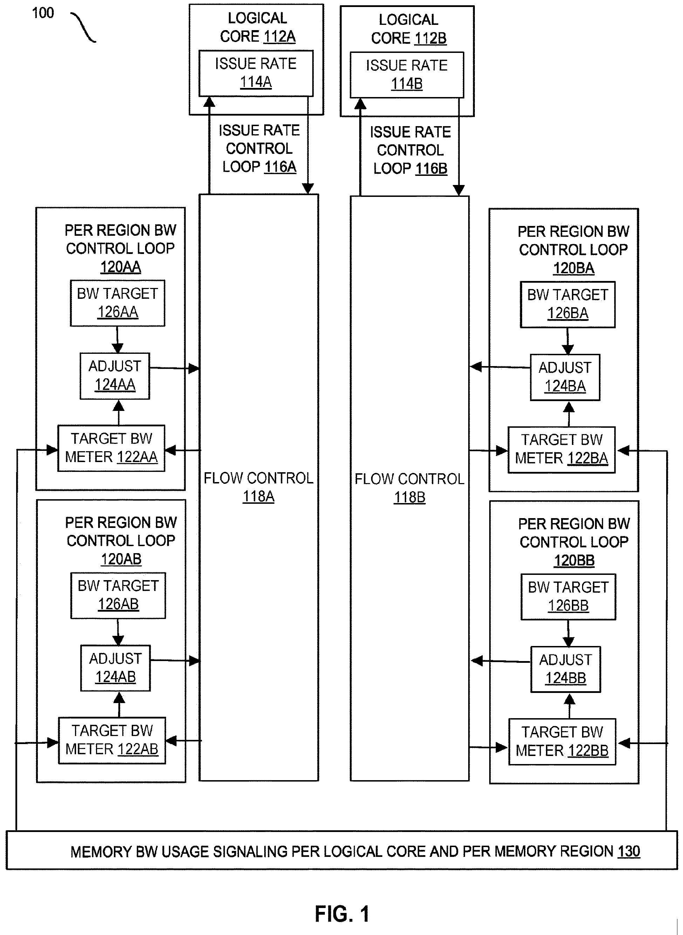

For example, Figure 1 illustrates a configuration of hardware 100 for region-aware MBA control according to an embodiment. Figure shows, for ease of illustration, two logical cores 112A and 112B and two per-region bandwidth (BW) control loops per logical core, for a total of four per-region BW control loops 120AA, 120AB, 120BA, and 120BB. Per-region BW control loops 120AA and 120BA may correspond to a first region of memory and per-region BW control loops 120AB and 120BB may correspond to a second region of memory. A variety of other configurations are possible, with any number of logical cores, any number of per-region control loops for any number of regions of memory, etc.

Implementations may include, for example, multiple control loops per thread or core, wherein within any and/or each group of multiple control loops per thread or core, there may be a first control loop (e.g., 120AA) for that thread or core's (e.g., 112A) use of memory bandwidth to a first region of memory, a second control loop (e.g., 120AB) for that thread or core's use of memory bandwidth to a second region of memory, a third control loop for that thread or core's use of memory bandwidth to a third region of memory, a fourth control loop for that thread or core's use of memory bandwidth to a fourth region of memory, etc. That thread or core may issue a request to memory and receive a corresponding response. The response provides information about the memory resource or region it was issued from, in order to feed memory usage information (e.g., from memory BW usage signaling per logical core and per memory region block 130) into the control loop for that thread or core and the corresponding region of memory to provide for that control loop's rate control meter (e.g., target BW meter 122AA), and/or associated flow control logic (e.g., flow control block 118A) to modulate the bandwidth to that region of memory by controlling (e.g., via issue rate control loop 116A) the issue rate (e.g., issue rate 114A) from that thread or core (as further described by example below).

In embodiments, the flow control logic may select the most conservative control (e.g., the least allocation of memory bandwidth) indicated by any number (e.g., four) of control loops (e.g., one per defined region or type of memory).

In embodiments, software (e.g., an operating system (OS), virtual machine monitor (VMM), hypervisor, host software in a multi-tenant environment, quality of service (QoS) management software, or other system or privileged software, any of which may be referred to as QoS software) may set bandwidth targets (e.g., BW targets 126AA, 126AB, 126BA, 126BB) on a per thread or core basis for a number (which may be referred to as N in the following description, where in one implementation N=4) of memory regions or resources. Each thread and memory region/resource and thread may be managed by a rate control meter (e.g., target BW meters 122AA, 122AB, 122BA, 122BB) that modulates (e.g., via adjust blocks 124AA, 124AB, 124BA, 124BB and flow control blocks 118A, 118B) the thread's traffic toward the memory region/resource around and/or relative to the corresponding bandwidth target.

For ease of description, the term "region" may be used to refer to memory regions, types of memory, memory resources, etc. For example, the N memory regions may be N contiguous regions (e.g., address range based), N memory resource types (e.g., double data rate (DDR) memory, memory accessed through Compute Express Link (CXL), memory accessed through card readers (CR), and memory accessed through Ultra Path Interconnect (UPI). In embodiments, memory resource types may be specified in various ways, such as but not limited to all traffic toward DDR memory regardless of location (local, remote, or CXL), all traffic toward CXL including remote, all traffic toward CR memory regardless of location (local or remote CXL), all traffic that utilizes a UPI link for cross socket data transfer regardless of target on the remote socket, memory behind Type 3 CXL, persistent memory behind CXL and remote memory links, etc.

In embodiments, the memory regions may be defined as address ranges (e.g., by the system address decoder in the processor). A color or tag may be associated with each address range to identify it as which one of the N regions. Responses from the address ranges may carry the region's color or tag with it, to be fed into the appropriate rate controller.

In embodiments, QoS software may allocate bandwidth targets to applications on a per resource level. As one example, if the user is familiar with how applications are access and utilizing different memory regions, QoS software may be allowed to set bandwidth targets for each memory region. As another example, QoS software may be allowed to set a bandwidth target for the fastest memory region (e.g., DDR memory), and bandwidth targets for the remaining memory targets may be scaled (e.g., the scaling function may be a basic input/output system (BIOS) option that may be selected at boot time).

In embodiments, a control loop's rate control meter and/or associated flow control logic may limit use of a resource (e.g., bandwidth to a memory region) by a thread, logical core, physical core, software application, etc. (any of which may be referred to as an agent), for example by limiting access by the thread or core to the resource based on time, based on a crediting scheme, etc. In embodiments, a throttling technique may be used to restrict or prevent access during one or more first periods within a second (larger than the first) period, while allowing or providing access during the remainder of the second period. Embodiments may provide for various granularities at which access may be restricted or prevented, for example, embodiments may provide for a throttling granularity of 10% such that a rate limiter may perform throttling to reduce MBA to any of 90%, 80%, 70%, etc. of full capacity.

In embodiments, a control loop's rate control meter and/or associated flow control logic may include rate monitoring capability (e.g., implemented in hardware) and rate limiting capability (e.g., implemented in hardware). The rate monitoring capability may provide a monitoring capability to determine whether its associated agent is overutilizing bandwidth to a memory region. The rate limiting capability may provide for setting and adjusting rate limits for agents that are overusing bandwidth to a memory region or consuming less than they are allocated. For example, if a measurement from the rate monitoring capability indicates that demand for bandwidth to a memory region is higher than a target or prescribed bandwidth to the memory region, a first MBA rate setting may be selected, where the first MBA rate setting is limited and slower than a second MBA rate setting (e.g., unlimited, unthrottled), that may be otherwise selected and/or used.

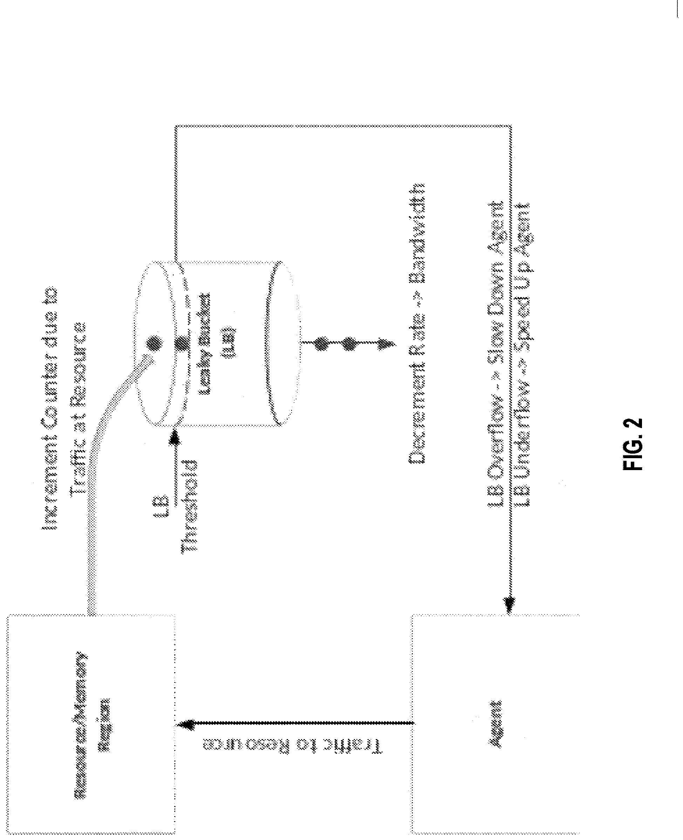

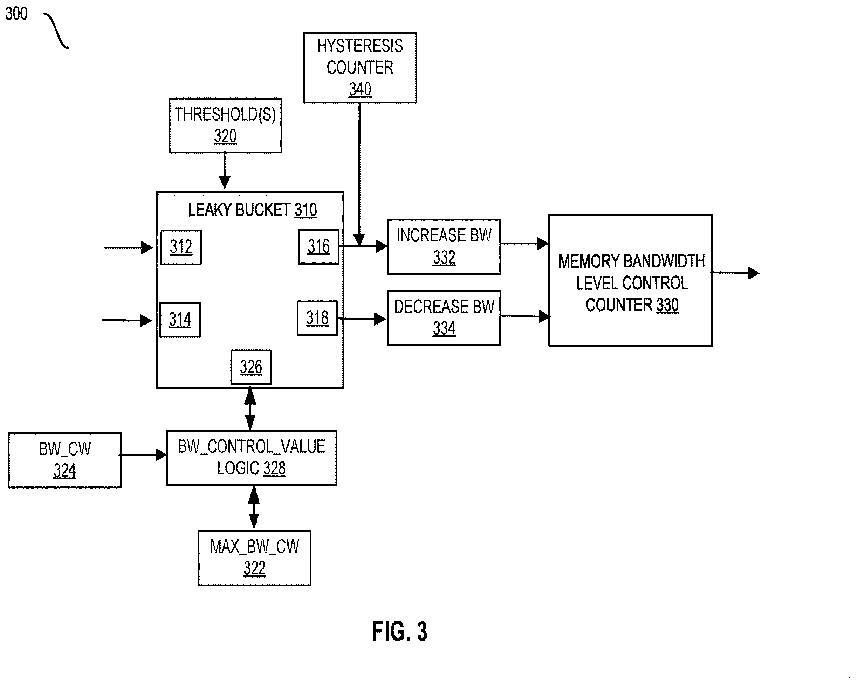

In embodiments, a rate control loop (e.g., per-region BW control loops 120AA, 120AB, 120BA, and 120BB) may be implemented with a leaky bucket counter, as shown, for example, conceptually in Figure 2 and in a block diagram in Figure 3, to provide for modulating bandwidth to a corresponding region of memory by controlling the issue rate from a corresponding agent.

A leaky bucket counter may provide dynamic indications of corresponding memory region bandwidth use and/or demand by a corresponding agent relative to a target. The indications may be used to determine, select, adjust, etc. a rate used or to be used by a rate limiting capability (e.g., to control, around an assigned bandwidth target, the traffic from an agent to a memory region).

For example, a leaky bucket counter 310 may be incremented based on a first input 312 indicating of a memory region's bandwidth use or demand (thus "adding water to the bucket") and decremented (by the same or a different amount with/than which it is incremented) based on a second input 314 indicating passage of time (thus "leaking water from the bucket"). The leaky bucket counter may generate one or more output signals 316 and 318 (e.g., based on whether or not one or more thresholds have been reached (met, exceeded, passed, etc.) to be used to adjust MBA rate and/or throttling control settings per memory region per agent.

In the steady state condition, the rate at which the leaky bucket counter increments should equal the rate at which it decrements. If the leaky bucket counter increments faster than it decrements, its count will reach (e.g., meet, exceed, pass, etc.) the defined threshold value, implying that the agent is issuing more traffic to the memory region than its assigned limit.

In embodiments, a leaky bucket counter may be incremented based on memory region bandwidth use and/or demand by a corresponding agent, for example, per each memory request to a region or responses from a memory region. In embodiments, a leaky bucket counter may be decremented based on passage of time, for example, whenever (e.g., for each occurrence of) a separate counter (e.g., a programmable time window counter) expires (e.g., decrements to zero). In embodiments, the threshold(s) at which a leaky bucket counter overflows (or underflows) may be programmable (e.g., in storage 320, which may be an MSR, as defined below) and/or may trigger one or more output signals when reached (e.g., met, exceeded, passed, etc.) by the leaky bucket count.

For example, a leaky bucket counter may be an n-bit (e.g., 16-bit) up-down counter that increments at a programmable delta value (e.g., +1, +2, +3, etc.) and decrements at a fixed delta value (e.g., -1). Other implementations are possible (e.g., increment delta value may be fixed, decrement delta value may be programmable, etc.). In an implementation, the leaky bucket counter may not underflow (e.g., minimum value is zero). In an implementation, the leaky bucket counter may not overflow above a defined threshold (e.g., it resets to zero whenever the threshold is reached or exceeded).

In embodiments, the leaky bucket threshold is the value at which the leaky bucket overflows. The overflow event may trigger a slow down (e.g., by throttling) event to the agent. Therefore, the leaky bucket threshold value corresponds to the burst response of the rate control meter. A large value means that the leaky bucket counter may increment more before it overflows (e.g., a more sustained number of requests from or completions to the agent causes the leaky bucket counter to overflow). Therefore, short spikes in traffic will not result in throttling actions and are filtered out. On the other hand, smaller values of the threshold mean that the leaky bucket counter increments less for an overflow event and hence a throttling action. Therefore, lower threshold values may result in quicker throttling actions. However, a balance may be desired because too low a value may result in the agent being throttled unnecessarily (e.g., the resource could have handled the brief uptick in traffic) and too high a value may result in the resource becoming overloaded and slowing down multiple agents.

Various approaches to decrementing a leaky bucket counter are possible. For example, an n-bit (e.g., 16-bit) time window counter may be initialized with a value that maps to the desired bandwidth target for the corresponding agent. The time window counter may count down (e.g., decrement once per clock cycle), and when it reaches zero may trigger a decrement of the leaky bucket counter. A higher initial time window value results in a slower decrement rate for the leaky bucket counter and therefore a greater likelihood it overflows, whereas a lower initial time window value results in a faster decrement rate for the leaky bucket counter and therefore a lower likelihood it overflows.

As another example, if it may be desirable to have a linear relationship between the rate at which the leaky bucket counter decrements and bandwidth, two new windows may replace the time window described above. A first window (Max_BW_Control_Window or MAX_BW_CW 322) may be a programmable (e.g., in an MSR, as described below) period or window of clock cycles over which bandwidth is modulated. A second window (BW_Control_Window or BW_CW 324) may be a programmable (e.g., in an MSR, as described below) period or window, less than or equal to the Max_BW_Control_Window, over which the leaky bucket counter may decrement. Therefore, a leaky bucket counter may have an input/output (e.g., 326) to provide for a bandwidth control value (e.g., BW_Control_Value) to be calculated and maintained by circuitry/logic (e.g., 328) based on BW_CW, MAX_BW_CW, and the leaky bucket count.

As an example, if MAX_BW_CW = 10 and BW_CW = 5, then the leaky bucket counter may decrement five times within the ten cycles of the MAX_BW_CW, which means that the agent has a bandwidth of 50%, i.e., it may meter five requests within the cycle window.

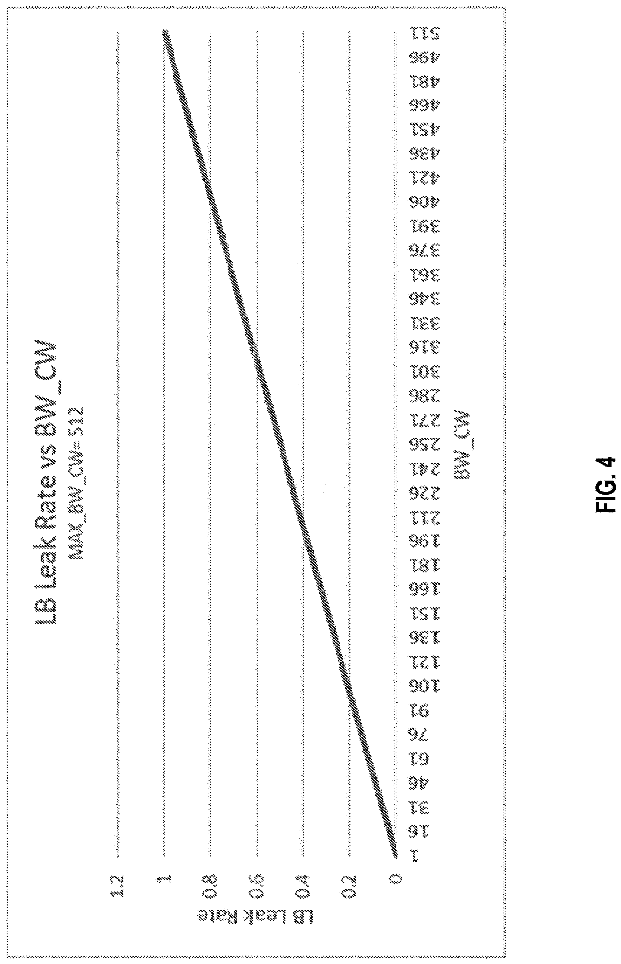

A linear relationship between the leaky bucket leak rate and the BW_CW is shown, for example, in Figure 4.

A linear relationship between the rate at which the leaky bucket counter decrements and bandwidth may be desired so that step changes in the BW_CW correspond to uniform step change in the leaky bucket leak rate and therefore to agent bandwidth and/or so that every value on the BW_CW provides a corresponding consistent step change in the leak rate.

In such embodiments, increasing the size of the BW_CW increases the granularity of the leak rate. For example, with a 9-bit MAX_BW_CW and a 9-bit BW_CW, using a 2GHz clock (e.g., in the uncore or system agent), bandwidth throttling points with step sizes of 0.125GB/second are distributed over a wide range between 64GB/second and 0.125GB/second.

Such embodiments may include details for implementing and decrementing the MAX_BW_CW and the BW_CW, such as:
- Implement a programmable down counter for each of MAX_BW_CW and BW_CW.
- Decrement the MAX_BW_CW if it is greater than zero.
- Reset the MAX_BW_CW to a programmed initial value when the counter decrements to zero.
- Decrement BW_CW if the MAX_BW_CW is greater than zero and the leaky bucket is greater than zero.
- Reset the BW_CW to a programmed initial value when the counter decrements to zero.
- If BW_CW is not fully consumed in this MAX_BW_CW, transfer (i.e., add) a portion of the remainder to the BW_CW for the next MAX_BW_CW. The amount transferred may be programmable.
- Default values may MAX_BW_CW and BW_CW may be set out of reset.

An example with MAX_BW_CW set to eight and BW_CW set to four is shown in Table 1.

**Table 1**

| MAX_BW_CW = 8 | Max_BW_Control_Window | | | | | | | |
|---|---|---|---|---|---|---|---|---|
| BW_CW = 4 | decrement LB > 0 | decrement LB > 0 | LB == 0 | decrement LB > 0 | LB == 0 | LB == 0 | LB == 0 | decrement LB > 0 |
| Leaky Bucket | 2 | 1 | 0 | 1 | 0 | 0 | 0 | 2 |

Such embodiments may include details for implementing, incrementing, and decrementing the leaky bucket counter, such as:
- Implement an up-down counter for the leaky bucket.
- Increment steps may be 0, 1, 2, or 3.
- Decrement by one every cycle when the BW_CW is greater than zero. The leaky bucket counter should not underflow when it reaches zero.
- The leaky bucket counter should not overflow the leaky bucket threshold value. Instead, it should saturate.
- The leaky bucket counter should reset to zero when it reaches the leaky bucket threshold value.

In an embodiment (e.g., such as Figure 3), the BW Control_Window may be set by QoS software based on the bandwidth target allocated to an agent. The leaky bucket counter may be incremented on responses received from the region of memory or resource that is being tracked.

In an embodiment (e.g., such as Figure 3), output signal(s) from the leaky bucket counter may sent be to the agent (e.g., through memory bandwidth level counter 330 and/or other circuitry/logic) to modulate the agent's issue rate. There may be two thresholds defined in the leaky bucket: a low threshold (e.g., 316), below which the rate control meter may include circuitry/logic (e.g., 332) to increase bandwidth, and a high threshold (e.g., 318), above which the rate meter may include circuitry/logic (e.g., 334) to decrease bandwidth.

In an embodiment (e.g., such as Figure 3), a hysteresis counter (e.g., 340) may be included in or used by the rate meter to prevent increases in bandwidth from occurring too rapidly (e.g., bandwidth may be increased after the hysteresis counter has counted down for a programmed period of time).

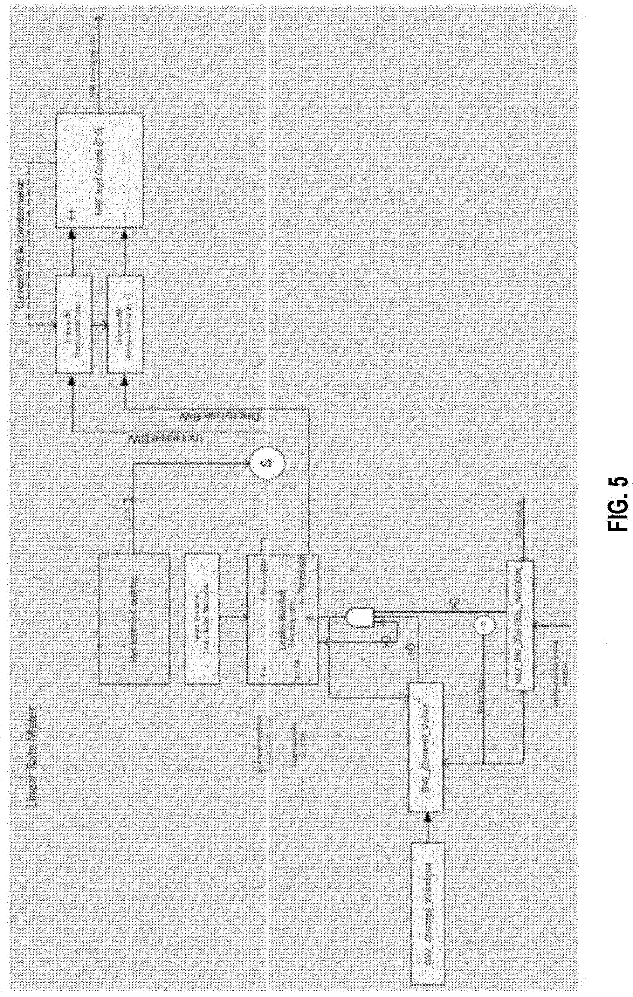

An example of an implementation with a linear rate meter is illustrated in Figure 5.

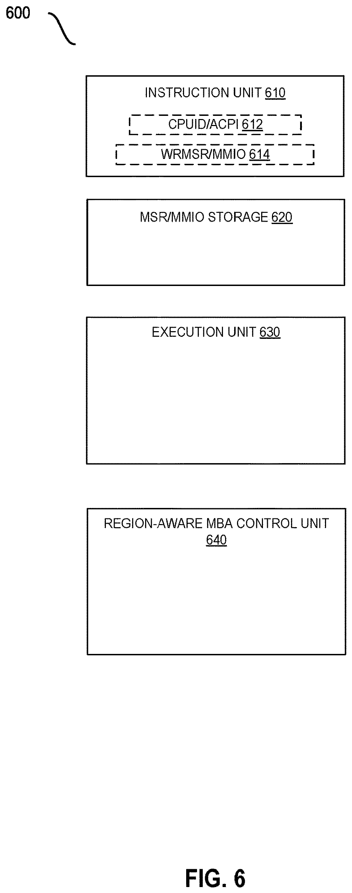

FIG. 6 illustrates an apparatus 600 for region-aware MBA control according to an embodiment. Apparatus 600 (which may also be referred to as processor 600) may represent all or part of a hardware component (e.g., a system on a chip or SoC) including one or more processors, processor devices, processor cores, or execution cores integrated on a single substrate or packaged within a single package, each of which may include multiple execution threads and/or multiple execution cores, in any combination. Each processor represented as or in processor 600 may be any type of processor, including a general-purpose microprocessor, such as a processor in the Intel^{®} Core^{®} Processor Family or other processor family from Intel^{®} Corporation or another company, a special purpose processor or microcontroller, or any other device or component in an information processing system in which an embodiment may be implemented. Processor 600 may be architected and designed to operate according to any instruction set architecture (ISA), with or without being controlled by microcode. For convenience and/or examples, some features (e.g., instructions) may be referred to by a name associated with a specific processor architecture (e.g., Intel^{®} 64 and/or IA32), but embodiments are not limited to those features, names, architectures, etc.

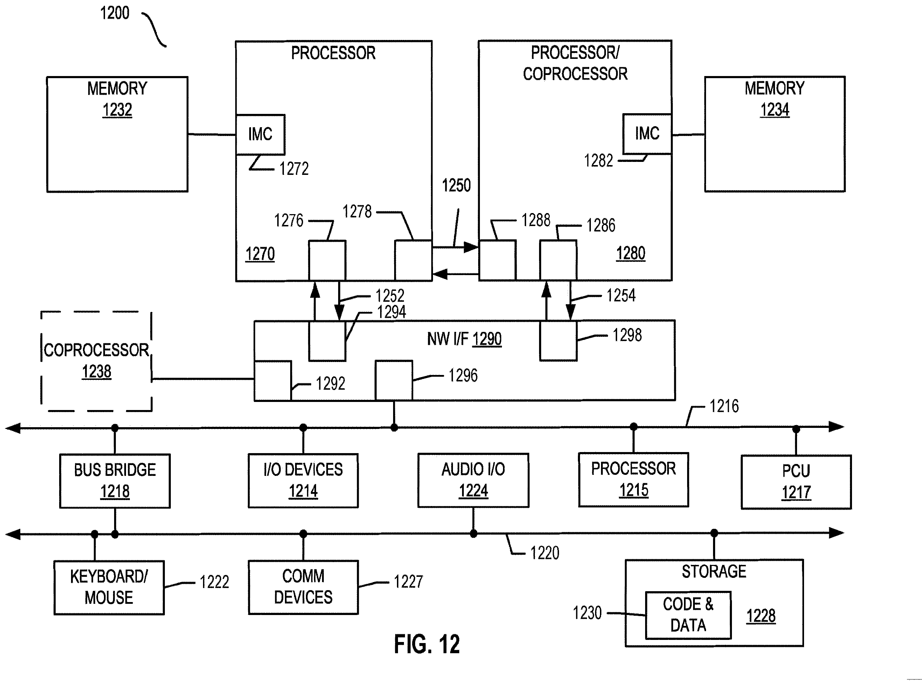

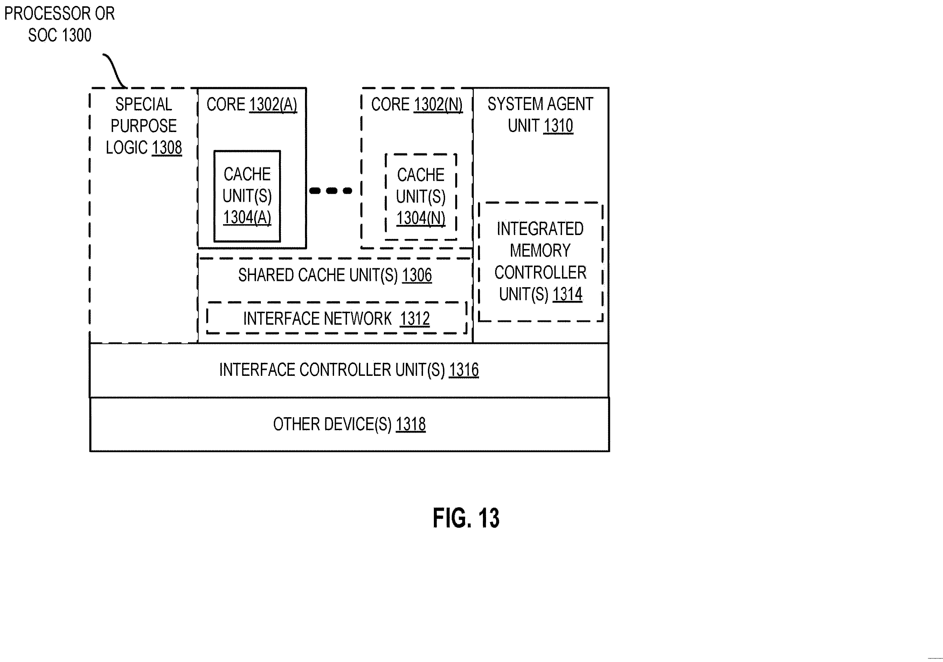

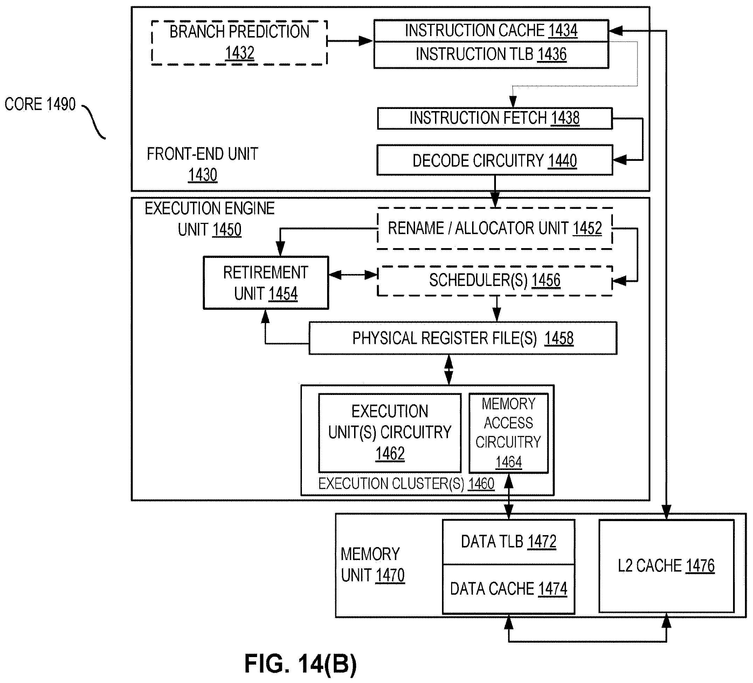

Processor 600 may be implemented in logic gates and/or any other type of circuitry, all, or parts of which may be included in a discrete component and/or integrated into the circuitry of a processing device or any other apparatus in a computer or other information processing system. For example, processor 600 in Figure 6 may correspond to and/or be implemented/included in any of processors 1270, 1280, or 1215 in Figure 12, processor 1300 or one of cores 1302A to 1302N in Figure 13, and/or core 1490 in Figure 14B, each as described below.

As shown, processor 600 includes instruction unit 610, model or machine specific registers (MSRs) 620, execution unit 630, and region-aware MBA control unit 640. Processor 600 may include any number of each of these elements (e.g., multiple execution units) and/or any other elements not shown in Figure 2.

Instruction unit 610 may correspond to and/or be implemented/included in front-end unit 1430 in Figure 14B, as described below, and/or may include any circuitry, logic gates, structures, and/or other hardware, such as an instruction decoder, to fetch, receive, decode, interpret, schedule, and/or handle instructions, such as a processor identification instruction 612 (e.g., CPUID as described below) and one or more write instructions 614 (e.g., WRMSR as described below) to be executed by processor 600. Any instruction format may be used in embodiments; for example, an instruction may include an opcode and one or more operands, where the opcode may be decoded into one or more micro-instructions or micro-operations for execution by execution unit 630. Operands or other parameters may be associated with an instruction implicitly, directly, indirectly, or according to any other approach.

MSRs 620 (and the term MSR) may correspond to any one or more model specific registers, machine specific registers, one or more registers or storage locations, one or more of which may be in a core, one or more of which may be in an uncore or system agent, etc. to control and report on processor performance, handle system related functions, etc. In various embodiments, MSRs 620 (or any set or subset of MSRs 620) may or may not be accessible to application and/or user-level software.

In embodiments, MSRs 620 may include one or more platform QoS registers (PQRs) and/or other MSRs that may be programmed (e.g., by QoS software, a basic input/output system (BIOS), etc.) to implement MBM and/or MBA policies, mappings, settings, etc., such as mappings of memory ranges and/or types to allocation regions, mappings of threads or cores to classes of service (CLOS), mappings of CLOS to rate limit settings and/or delay values, bandwidth targets, leaky bucket threshold and increment values, time and/or control window counter maximum and decrement values, hysteresis counter values, and other settings (each as may be described below).

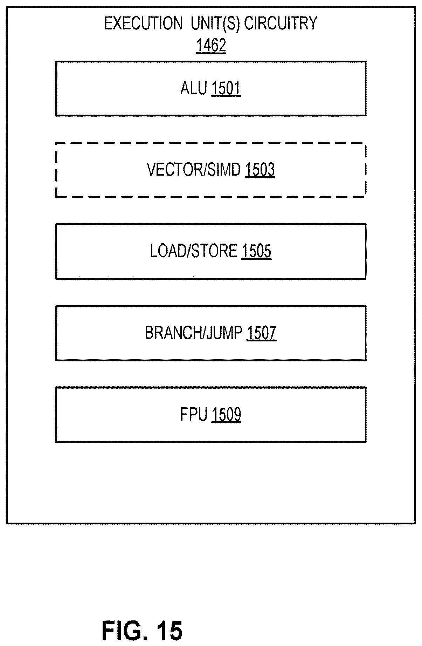

Execution unit 630 may correspond to and/or be implemented/included in any of execution engine 1450 in Figure 14B and/or execution unit circuitry 1462 in Figures 14B and 15, each as described below, and/or include any circuitry, logic gates, structures, and/or other hardware, such as arithmetic units, logic units, floating point units, shifters, etc., to process data and execute instructions, micro-instructions, and/or micro-operations. Execution unit 230 may represent any one or more physically or logically distinct execution units.

Region-aware MBA control unit 640 may include any circuitry, logic, structures, and/or other hardware to count, measure, monitor, estimate, modulate, control, etc. memory requests, memory responses, memory bandwidth, memory request issue rates, etc. according to embodiments. For example, region-aware MBA control unit 640 may represent and/or include any circuitry, logic, structures, and/or other hardware represented in Figure 1, Figure 3, and/or Figure 5.

In embodiments, the instruction set of processor 600 may include instructions to access (e.g., read and/or write) MSRs, such as an instruction to write to an MSR (WRMSR), for example to program PQRs and/or MSRs to implement MBM and/or MBA policies, mappings, settings, etc., such as mappings of memory ranges and/or types to allocation regions, mappings of threads or cores to classes of service (CLOS), mappings of CLOS to rate limit settings and/or delay values, bandwidth targets, leaky bucket threshold and increment values, time and/or control window counter maximum and decrement values, hysteresis counter values, and other settings (each as may be described below), and/or otherwise configure region-aware MBA control unit 640.

Processor 600 may also include a mechanism to indicate support for and enumeration of MBM, MBA, and region-aware MBA capabilities according to embodiment. For example, in response to an instruction (e.g., in an Intel^{®} x86 processor, a CPUID instruction, one or more processor registers (e.g., EAX, EBX, ECX, EDX) may return information to indicate whether, to what extent, how, etc. MBM, MBA, and region-aware MBA is supported.

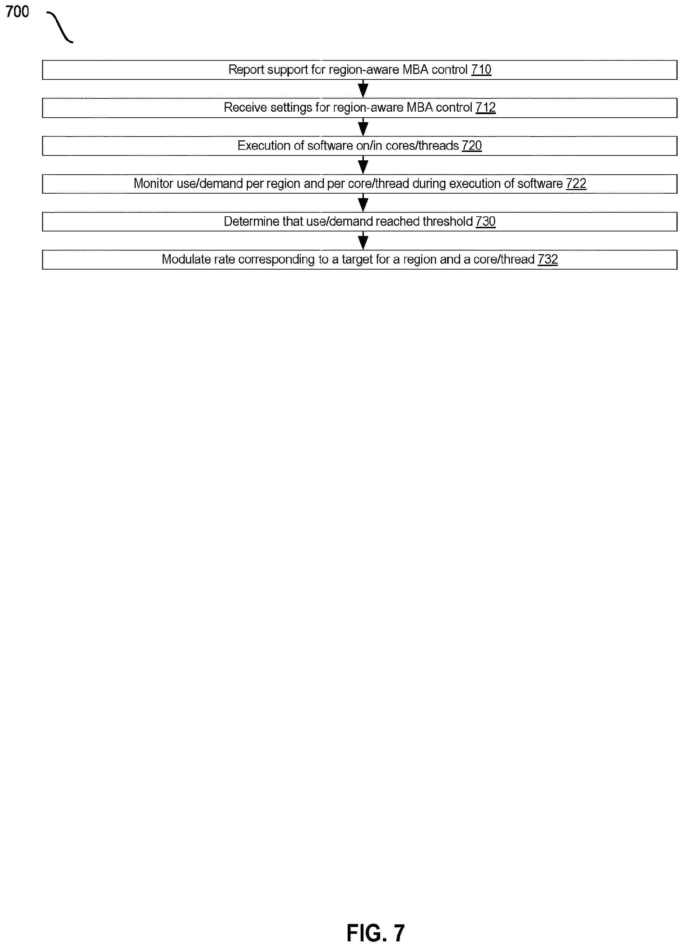

Figure 7 illustrates a method 700 for region-aware MBA control according to an embodiment. Method 700 may be performed by and/or in connection with the operation of a processor such as processor 600 in Figure 6; therefore, all or any portion of the preceding descriptions of Figure 1 to Figure 6 may be applicable to method 700.

In 710, support for a region-aware MBA control feature, may be detected (e.g., by QoS software using CPUID instructions). In 712, the region-aware MBA control feature may be configured (e.g., by QoS software using WRMSR instructions), which may include but is not limited to defining and/or specifying memory regions to which separate bandwidth allocations or targets per thread or logical core may be specified, specifying bandwidth allocations or targets per region and per thread or logical core, and/or specifying settings for a rate control circuitry and/or logic including a leaky bucket counter and/or a linear rate meter.

In 720, execution of software (e.g., one or more applications) on one or more cores and/or in one or more threads may begin with a first set of allocations of a set of resources (e.g., bandwidths to memory regions) to each core and/or thread. In 722 (e.g., concurrently with, during, and/or overlapping with 720), use and/or demand of each (or any one or more) region by each (or any one or more) core/thread may be monitored and compared to corresponding target values, for example, using rate control circuitry including a leaky bucket counter and/or a linear rate meter.

In 730, it may be determined (e.g., by the rate control circuitry), that use/demand of (e.g., memory bandwidth) one or more regions by one or more cores/threads has reached (e.g., increased to or beyond or decreased to or beyond) a threshold (e.g., upper or lower).

In 732 (e.g., in response to 730), one or more rates (e.g., memory request issue rates) corresponding to one or more of the per region per core/thread targets may be modulated, adjusted, etc. (e.g., by changing throttle settings) toward the target(s).

Execution of software on/in the cores/threads may continue as such, with allocations of and/or access to a resource per region and per core/thread being monitored and adjusted, as desired, according to embodiments, alone or in combination with other techniques.

Method 700 and/or any other method embodiments may include any details, features, etc. or combinations of details, features, etc. described in this specification.

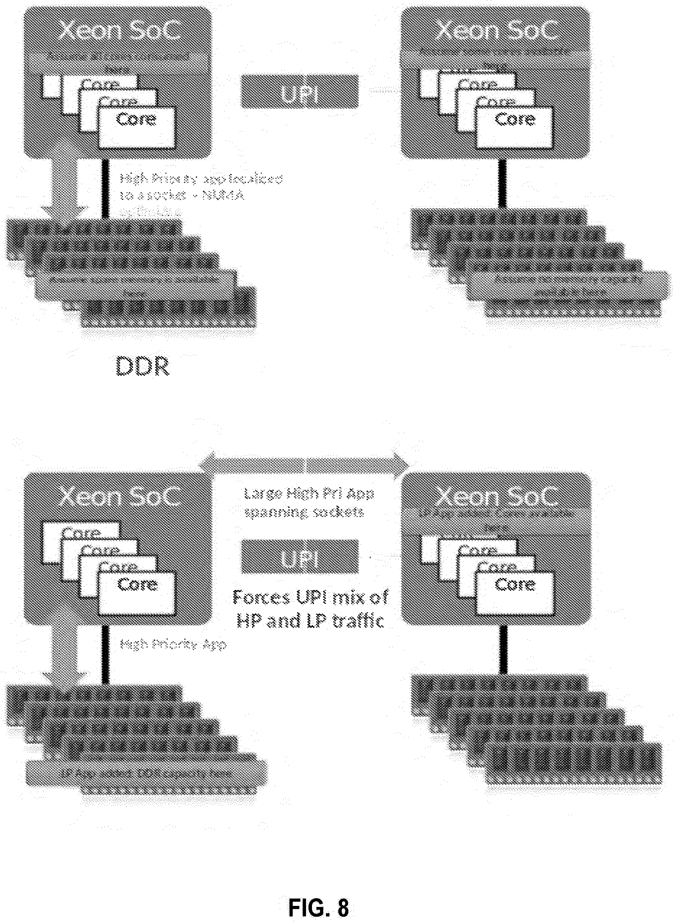

An example usage model, as shown in Figure 8, may include embodiments in which two sockets are connected by a UPI link. A high priority application that is non-uniform memory (NUMA) optimized could face resource contention when a lower priority application spans across both sockets. Region-aware MBA according to an embodiment may allow QoS software to set a bandwidth target on the UPI link to limit the amount of bandwidth that the lower priority cores can utilize and hence minimize interference with the high priority application.

Another example usage model may include embodiments that allow separation of memory into regions based on bandwidth and latency, such that higher priority applications may have more bandwidth to faster memory than lower priority applications.

The preceding discussion and the following description(s) of embodiments are provided as examples. Embodiments may include and/or relate to other shared resources or any other hardware resources that may be treated as parts of or subgroups of a group.

According to some examples, an apparatus includes a processing core and control circuitry. The processing core is to execute a plurality of threads. The control circuitry is to control use of memory bandwidth per memory region and per thread.

According to some examples, a method includes configuring a region-aware memory bandwidth control feature in a processor having a processing core to execute a plurality of threads; determining that use of memory bandwidth of one of a plurality of memory regions by a thread has reached a threshold; and adjusting a rate corresponding to use of memory bandwidth by the thread.

According to some examples, a system includes a system memory, a processing core, and control circuitry. The system memory is to be divided into a plurality of memory regions. The processing core is to execute a plurality of threads. The control circuitry is to control use of memory bandwidth per memory region and per thread.

Any such examples may include any or any combination of the following aspects. One or more of a plurality of memory regions may correspond to one or more of a plurality of types of memory. One or more of a plurality of memory regions may correspond to one or more of a plurality of ranges of memory. The plurality of threads may include a first thread and a second thread; and the control circuitry may include a first control loop to monitor the first thread's use of memory bandwidth to a first memory region relative to a first target, a second control loop to monitor the first thread's use of memory bandwidth to a second memory region relative to a second target, a third control loop to monitor the second thread's use of memory bandwidth to the first memory region relative to a third target, a fourth control loop to monitor the second thread's use of memory bandwidth to the second memory region relative to a fourth target, and rate control circuitry to adjust a memory request issue rate of the first thread based at least on the first and second control loops and to adjust a memory request issue rate of the second thread based at least on the third and fourth control loops. The apparatus rate control circuitry may be to adjust memory request issue rate from a thread to a most conservative issue rate of any issue rate indicated by any control loop corresponding to the thread. The control circuitry may include at least one linear rate meter. The linear rate meter may be to operate based on a maximum bandwidth control window and a bandwidth control window, wherein the maximum bandwidth control window is to specify a leaky bucket counter window, and the bandwidth control window is to specify a number of times a leaky bucket count is to be decremented within the leaky bucket counter window. A first leaky bucket counter threshold value may be used to indicate a memory request issue rate is to be increased. A second leaky bucket counter threshold value may be used to indicate a corresponding memory request issue rate is to be decreased. The rate may be a memory request issue rate of the first thread. The rate may be adjusted to a most conservative rate of any rate indicated by any control loop corresponding to the thread. The determining is based on a linear rate meter. A first leaky bucket counter threshold value is to be used to indicate the rate is to be increased. A second leaky bucket counter threshold value is to be used to indicate the rate is to be decreased.

According to some examples, an apparatus may include means for performing any function disclosed herein; an apparatus may include a data storage device that stores code that when executed by a hardware processor or controller causes the hardware processor or controller to perform any method or portion of a method disclosed herein; an apparatus, method, system etc. may be as described in the detailed description; a non-transitory machine-readable medium may store instructions that when executed by a machine causes the machine to perform any method or portion of a method disclosed herein. Embodiments may include any details, features, etc. or combinations of details, features, etc. described in this specification.

In some embodiments, a processor or execution core in an information processing system may support a cache allocation technology including cache capacity bitmasks. Embodiments may relate to methods, apparatus, systems, and non-transitory computer-readable storage media for cache allocation technology support for non-contiguous and asymmetric cache capacity bitmasks.

A processor or execution core in an information processing system may support a cache allocation technology including cache capacity bitmasks. For example, the Intel RDT feature set provides a set of allocation (resource control) capabilities including Cache Allocation Technology (CAT) supported by various levels of cache including the L2 and L3 caches. CAT enables an OS, hypervisor, VMM, or similar system service management agent to specify the amount of cache space into which an application can fill, by programming Cache Capacity Bitmasks (CBMs). On current processors, only contiguous '1' combinations are supported by these CBMs; and any attempt by software to program a value without contiguous '1's will result in a general protection fault #GP(0). Therefore, software discovers, using enumeration such as CPUID or processor specific documentation, the exact way mask that is supported by each cache level. Software then carefully ensures at run time using either a CPUID or a Family-Model-Stepping (FMS) check that all values it programs into the CBM are both a subset of what cache level supports, as well as the values its programs only have contiguous 1s.

In contrast, embodiments described in this specification provide for Cache Capacity Bitmasks (CBMs) for both L2 and L3 caches to support all values including those with non-contiguous 1s, and any bits in the mask that are beyond the capability of the hardware are simply ignored. The WRMSR instruction which is used to program these CBMs will no longer GP fault if software programs a value that is non-contiguous or sets bits that are beyond the number of bits that control the way mask. This capability may be enumerated using CPUID.

Cache sizes and configurations may change significantly on each processor implementation. CBM values that are tuned for a specific processor may be unoptimal on a different processor, not just limiting performance, but also causing execution faults if the software programmed value is beyond the limit of the supported hardware. This becomes problematic in hybrid configurations where the optimal CBM is different for each micro-architecture.

OS, hypervisor, VMM, or similar system service management agent may leverage L2 or L3 CAT and program CBMs to specify the amount of cache space into which an application may fill, and embodiments may allow them to check the CPUID enumeration to discover that the processor supports these enhanced CBMs. They may program non-contiguous values to the CBMs as well as the same value on all processor cores in a hybrid platform, thus accommodating cache sizes and configurations that may change on each processor implementation. CBM values tuned for a specific processor may be unoptimal on a different processor, not just limiting performance, but also causing execution faults if the software programmed value is beyond the limit of the supported hardware. This becomes problematic in hybrid configurations where the optimal CBM is different for each micro-architecture.

The preceding discussion and the following description(s) of embodiments, based on cache capacity bitmaps, are provided as examples. Embodiments may include and/or relate to other cache allocation and/or resource allocation technologies.

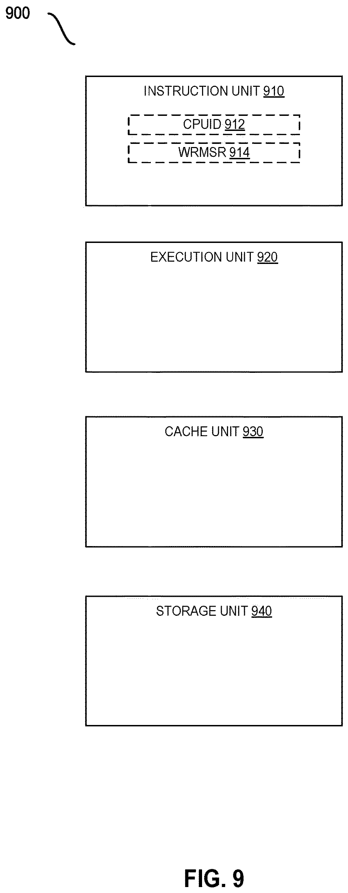

Figure 9 illustrates processor 900 for cache allocation technology support for non-contiguous and asymmetric cache capacity bitmasks according to an embodiment.

Processor 900 may represent all or part of a hardware component including one or more processors, processor cores, or execution cores integrated on a single substrate or packaged within a single package, each of which may include multiple execution threads and/or multiple execution cores, in any combination. Each processor represented as or in processor 900 may be any type of processor, including a general-purpose microprocessor, such as a processor in the Intel^{®} Core^{®} Processor Family or other processor family from Intel^{®} Corporation or another company, a special purpose processor or microcontroller, or any other device or component in an information processing system in which an embodiment may be implemented. Processor 900 may be architected and designed to operate according to any instruction set architecture (ISA), with or without being controlled by microcode. For convenience and/or examples, some features (e.g., instructions, registers, exceptions, etc.) may be referred to by a name associated with a specific processor architecture (e.g., Intel^{®} 64 and/or IA32), but embodiments are not limited to those features, names, architectures, etc.

Processor 900 may be implemented in logic gates and/or any other type of circuitry, all, or parts of which may be included in a discrete component and/or integrated into the circuitry of a processing device or any other apparatus in a computer or other information processing system. For example, processor 900 in Figure 9 may correspond to and/or be implemented/included in any of processors 1270, 1280, or 1215 in Figure 12, processor 1300 or one of cores 1302A to 1302N in Figure 13, and/or core 1490 in Figure 14B, each as described below.

Processor 900 may support allocation of resources according to any approach.

As shown, processor 900 includes instruction unit 910, execution unit 920, cache 930, and storage location 940. Processor 900 may include any number of each of these elements (e.g., multiple caches) and/or any other elements not shown in Figure 9.

Instruction unit 910 may correspond to and/or be implemented/included in front-end unit 1430 in Figure 14B, as described below, and/or may include any circuitry, logic gates, structures, and/or other hardware, such as an instruction decoder, to fetch, receive, decode, interpret, schedule, and/or handle instructions, such as a processor identification instruction 912 (e.g., CPUID as described below) and one or more write instructions 914 (e.g., WRMSR as described below) to be executed by processor 900. Any instruction format may be used within the scope of the present invention; for example, an instruction may include an opcode and one or more operands, where the opcode may be decoded into one or more micro-instructions or micro-operations for execution by execution unit 920. Operands or other parameters may be associated with an instruction implicitly, directly, indirectly, or according to any other approach.

Execution unit 920 may correspond to and/or be implemented/included in any of execution engine 1450 in Figure 14B and/or execution unit circuitry 1462 in Figure 15, each as described below, and/or include any circuitry, logic gates, structures, and/or other hardware, such as arithmetic units, logic units, floating point units, shifters, etc., to process data and execute instructions, micro-instructions, and/or micro-operations. Execution unit 120 may represent any one or more physically or logically distinct execution units.

Storage locations 940 may represent one or more registers such as model/machine specific registers (MSRs) and/or may be referred to for convenience as MSRs. Some such MSRs may be specific to a processor or processor architecture (e.g., Intel^{®} 64 and/or IA32) and/or some may be more specifically described below. In various embodiments, MSRs (or any set or subset of MSRs) may be within and/or accessible by a core (core-scoped) or external to a core (e.g., within an uncore or system agent) and/or accessible by more than one core (package-scoped).

In embodiments, the instruction set of processor 900 may include instructions to access (e.g., write) MSRs.

Processor 900 may also include a mechanism to indicate support for and enumeration of cache/resource allocation capabilities according to an embodiment. For example, in response to an instruction (e.g., in an Intel^{®} x86 processor, a CPUID instruction executed with EAX=10H), one or more processor registers (e.g., EAX, EBX, ECX, EDX) may return information to indicate whether, to what extent, how, etc. cache/resource allocation capabilities are supported.

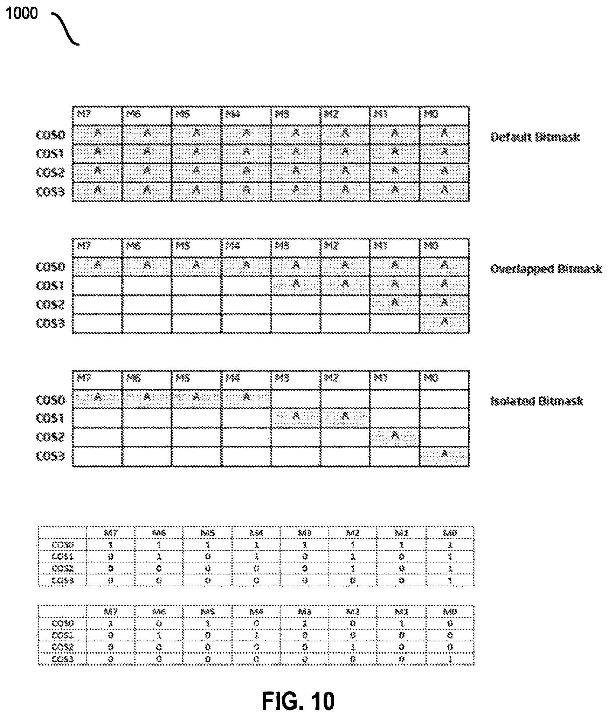

Figure 10 illustrates example layouts/formats 1000 of cache capacity bitmasks for a bit length of eight.

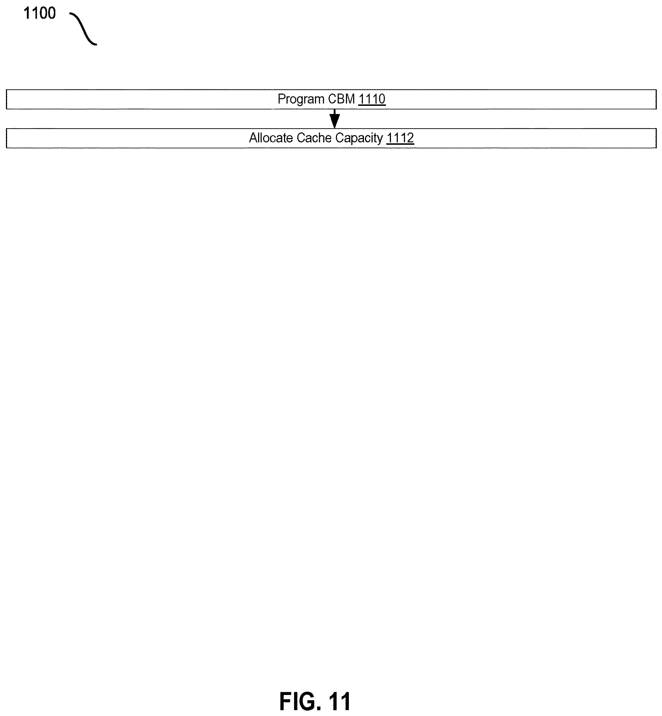

Figure 11 illustrates a method 1100 for cache allocation technology support for non-contiguous and asymmetric cache capacity bitmasks according to an embodiment. Method 1100 may be performed by and/or in connection with the operation of a processor such as processor 900 in Figure 9; therefore, all or any portion of the preceding description of processor may be applicable to method 1100.

In 1110, a cache capacity bitmask is programmed/configured. In 1120, cache capacity is allocated based on the cache capacity bitmask.

The Intel RDT feature set provides a set of allocation (resource control) capabilities including CAT supported by various levels of cache including the L2 and L3 caches. CAT enables an OS, hypervisor, VMM, or similar system service management agent to specify the amount of cache space into which an application can fill, by programming CBMs. A CBM provides a hint to the hardware indicating the cache space an application should be limited to as well as providing an indication of overlap and isolation in the CAT-capable cache from other applications contending for the cache. The bit length of the capacity mask available generally depends on the configuration of the cache and is specified in the enumeration process for CAT in CPUID (this may vary between models in a processor family as well).

It may be expected that in way-based implementations, one capacity mask bit corresponds to some number of ways in cache, but the specific mapping may be implementation-dependent. In some cases, a mask bit set to '1' may specify that a particular Class of Service can allocate into the cache subset represented by that bit. A value of '0' in a mask bit may specify that a Class of Service cannot allocate into the given cache subset. In general, allocating more cache to a given application is usually beneficial to its performance.

In the above example, only contiguous '1' combinations are allowed (e.g., FFFFH, 0FF0H, 003CH, etc.). Attempts to program a value without contiguous '1's (including zero) will result in a general protection fault (#GP(0)). This constraint may have been meaningful for past implementations of the Least Recently Used (LRU) scheme, which may have used a tree-based approach to compute LRU.

In upcoming processors, the contiguous '1' constraint may no longer needed by the CAT hardware, and this could be because the LRU scheme may be vector based for example. In addition, if the hardware always masks the CBM programmed by software with the actual way bits that it supports, it is benign if software sets extra bits in the CBM that do not map to any ways of the cache.

The WRMSR instruction which is used to program these CBMs will no longer GP fault if software programs a value that has non-contiguous '1s', or if software sets bits that are beyond the number of bits that control the way mask.

Embodiments may provide for an OS, VMM or similar software that programs these CBMs to discover that the processor supports these new capabilities. This may be enumerated using CPUID, for example, like CAT enumeration for each level of cache (L2 or L3) using separate sub-leaves of CPUID. By addition of separate enumeration of this non-contiguous 1's capability to each sub-leaf, it allows for the feature to be supported by only some levels of cache instead of all, for example as shown in Table 2.

**Table 2**

| **Leaf** | **Subleaf** | **Register** | **Stop Bit** | **Start Bit** | **Field Description** |
|---|---|---|---|---|---|
| 0x10 | 1 | ECX | 3 | 3 | Non-Contiguous 1s value supported if 1 (L3) |
| 0x10 | 2 | ECX | 3 | 3 | Non-Contiguous 1s value supported if 1 (L2) |

### Example Computer Architectures.

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

FIG. 12 illustrates an example computing system. Multiprocessor system 1200 is an interfaced system and includes a plurality of processors or cores including a first processor 1270 and a second processor 1280 coupled via an interface 1250 such as a point-to-point (P-P) interconnect, a fabric, and/or bus. In some examples, the first processor 1270 and the second processor 1280 are homogeneous. In some examples, first processor 1270 and the second processor 1280 are heterogenous. Though the example system 1200 is shown to have two processors, the system may have three or more processors, or may be a single processor system. In some examples, the computing system is a system on a chip (SoC).

Processors 1270 and 1280 are shown including integrated memory controller (IMC) circuitry 1272 and 1282, respectively. Processor 1270 also includes interface circuits 1276 and 1278; similarly, second processor 1280 includes interface circuits 1286 and 1288. Processors 1270, 1280 may exchange information via the interface 1250 using interface circuits 1278, 1288. IMCs 1272 and 1282 couple the processors 1270, 1280 to respective memories, namely a memory 1232 and a memory 1234, which may be portions of main memory locally attached to the respective processors.

Processors 1270, 1280 may each exchange information with a network interface (NW I/F) 1290 via individual interfaces 1252, 1254 using interface circuits 1276, 1294, 1286, 1298. The network interface 1290 (e.g., one or more of an interconnect, bus, and/or fabric, and in some examples is a chipset) may optionally exchange information with a coprocessor 1238 via an interface circuit 1292. In some examples, the coprocessor 1238 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 1270, 1280 or outside of both processors, yet connected with the processors via an interface such as P-P interconnect, such that either or both processors' local cache information may be stored in the shared cache if a processor is placed into a low power mode.

Network interface 1290 may be coupled to a first interface 1216 via interface circuit 1296. In some examples, first interface 1216 may be an interface such as a Peripheral Component Interconnect (PCI) interconnect, a PCI Express interconnect or another I/O interconnect. In some examples, first interface 1216 is coupled to a power control unit (PCU) 1217, which may include circuitry, software, and/or firmware to perform power management operations with regard to the processors 1270, 1280 and/or co-processor 1238. PCU 1217 provides control information to a voltage regulator (not shown) to cause the voltage regulator to generate the appropriate regulated voltage. PCU 1217 also provides control information to control the operating voltage generated. In various examples, PCU 1217 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 1217 is illustrated as being present as logic separate from the processor 1270 and/or processor 1280. In other cases, PCU 1217 may execute on a given one or more of cores (not shown) of processor 1270 or 1280. In some cases, PCU 1217 may be implemented as a microcontroller (dedicated or general-purpose) or other control logic configured to execute its own dedicated power management code, sometimes referred to as P-code. In yet other examples, power management operations to be performed by PCU 1217 may be implemented externally to a processor, such as by way of a separate power management integrated circuit (PMIC) or another component external to the processor. In yet other examples, power management operations to be performed by PCU 1217 may be implemented within BIOS or other system software.

Various I/O devices 1214 may be coupled to first interface 1216, along with a bus bridge 1218 which couples first interface 1216 to a second interface 1220. In some examples, one or more additional processor(s) 1215, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 1216. In some examples, second interface 1220 may be a low pin count (LPC) interface. Various devices may be coupled to second interface 1220 including, for example, a keyboard and/or mouse 1222, communication devices 1227 and storage circuitry 1228. Storage circuitry 1228 may be one or more non-transitory machine-readable storage media as described below, such as a disk drive or other mass storage device which may include instructions/code and data 1230. Further, an audio I/O 1224 may be coupled to second interface 1220. Note that other architectures than the point-to-point architecture described above are possible. For example, instead of the point-to-point architecture, a system such as multiprocessor system 1200 may implement a multi-drop interface or other such architecture.

### Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

FIG. 13 illustrates a block diagram of an example processor and/or SoC 1300 that may have one or more cores and an integrated memory controller. The solid lined boxes illustrate a processor 1300 with a single core 1302(A), system agent unit circuitry 1310, and a set of one or more interface controller unit(s) circuitry 1316, while the optional addition of the dashed lined boxes illustrates an alternative processor 1300 with multiple cores 1302(A)-(N), a set of one or more integrated memory controller unit(s) circuitry 1314 in the system agent unit circuitry 1310, and special purpose logic 1308, as well as a set of one or more interface controller units circuitry 1316. Note that the processor 1300 may be one of the processors 1270 or 1280, or co-processor 1238 or 1215 of FIG. 12.

Thus, different implementations of the processor 1300 may include: 1) a CPU with the special purpose logic 1308 being integrated graphics and/or scientific (throughput) logic (which may include one or more cores, not shown), and the cores 1302(A)-(N) being one or more general purpose cores (e.g., general purpose in-order cores, general purpose out-of-order cores, or a combination of the two); 2) a coprocessor with the cores 1302(A)-(N) being a large number of special purpose cores intended primarily for graphics and/or scientific (throughput); and 3) a coprocessor with the cores 1302(A)-(N) being a large number of general purpose in-order cores. Thus, the processor 1300 may be a general-purpose processor, coprocessor, or special-purpose processor, such as, for example, a network or communication processor, compression engine, graphics processor, GPGPU (general purpose graphics processing unit), a high throughput many integrated cores (MIC) coprocessor (including 30 or more cores), embedded processor, or the like. The processor may be implemented on one or more chips. The processor 1300 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 1304(A)-(N) within the cores 1302(A)-(N), a set of one or more shared cache unit(s) circuitry 1306, and external memory (not shown) coupled to the set of integrated memory controller unit(s) circuitry 1314. The set of one or more shared cache unit(s) circuitry 1306 may include one or more mid-level caches, such as level 2 (L2), level 3 (L3), level 4 (L4), or other levels of cache, such as a last level cache (LLC), and/or combinations thereof. While in some examples interface network circuitry 1312 (e.g., a ring interconnect) interfaces the special purpose logic 1308 (e.g., integrated graphics logic), the set of shared cache unit(s) circuitry 1306, and the system agent unit circuitry 1310, alternative examples use any number of well-known techniques for interfacing such units. In some examples, coherency is maintained between one or more of the shared cache unit(s) circuitry 1306 and cores 1302(A)-(N). In some examples, interface controller unit circuitry 1316 couples the cores 1302 to one or more other devices 1318 such as one or more I/O devices, storage, one or more communication devices (e.g., wireless networking, wired networking, etc.), etc.

In some examples, one or more of the cores 1302(A)-(N) are capable of multi-threading. The system agent unit circuitry 1310 includes those components coordinating and operating cores 1302(A)-(N). The system agent unit circuitry 1310 may include, for example, power control unit (PCU) circuitry and/or display unit circuitry (not shown). The PCU may be or may include logic and components needed for regulating the power state of the cores 1302(A)-(N) and/or the special purpose logic 1308 (e.g., integrated graphics logic). The display unit circuitry is for driving one or more externally connected displays.

The cores 1302(A)-(N) may be homogenous in terms of instruction set architecture (ISA). Alternatively, the cores 1302(A)-(N) may be heterogeneous in terms of ISA; that is, a subset of the cores 1302(A)-(N) may be capable of executing an ISA, while other cores may be capable of executing only a subset of that ISA or another ISA.

### Example Core Architectures - In-order and out-of-order core block diagram.

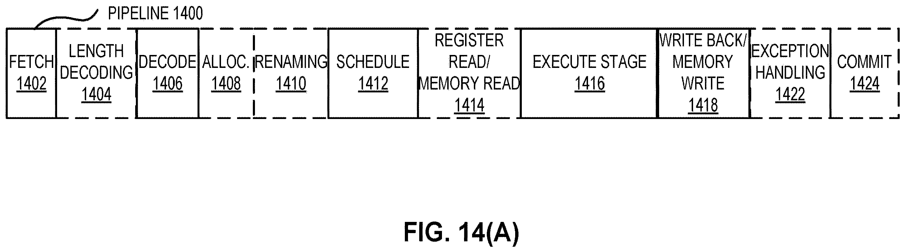

FIG. 14(A) is a block diagram illustrating both an example in-order pipeline and an example register renaming, out-of-order issue/execution pipeline according to examples. FIG. 14(B) is a block diagram illustrating both an example in-order architecture core and an example register renaming, out-of-order issue/execution architecture core to be included in a processor according to examples. The solid lined boxes in FIGS. 14(A)-(B) illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 14(A), a processor pipeline 1400 includes a fetch stage 1402, an optional length decoding stage 1404, a decode stage 1406, an optional allocation (Alloc) stage 1408, an optional renaming stage 1410, a schedule (also known as a dispatch or issue) stage 1412, an optional register read/memory read stage 1414, an execute stage 1416, a write back/memory write stage 1418, an optional exception handling stage 1422, and an optional commit stage 1424. One or more operations can be performed in each of these processor pipeline stages. For example, during the fetch stage 1402, one or more instructions are fetched from instruction memory, and during the decode stage 1406, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 1406 and the register read/memory read stage 1414 may be combined into one pipeline stage. In one example, during the execute stage 1416, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 14(B) may implement the pipeline 1400 as follows: 1) the instruction fetch circuitry 1438 performs the fetch and length decoding stages 1402 and 1404; 2) the decode circuitry 1440 performs the decode stage 1406; 3) the rename/allocator unit circuitry 1452 performs the allocation stage 1408 and renaming stage 1410; 4) the scheduler(s) circuitry 1456 performs the schedule stage 1412; 5) the physical register file(s) circuitry 1458 and the memory unit circuitry 1470 perform the register read/memory read stage 1414; the execution cluster(s) 1460 perform the execute stage 1416; 6) the memory unit circuitry 1470 and the physical register file(s) circuitry 1458 perform the write back/memory write stage 1418; 7) various circuitry may be involved in the exception handling stage 1422; and 8) the retirement unit circuitry 1454 and the physical register file(s) circuitry 1458 perform the commit stage 1424.

FIG. 14(B) shows a processor core 1490 including front-end unit circuitry 1430 coupled to execution engine unit circuitry 1450, and both are coupled to memory unit circuitry 1470. The core 1490 may be a reduced instruction set architecture computing (RISC) core, a complex instruction set architecture computing (CISC) core, a very long instruction word (VLIW) core, or a hybrid or alternative core type. As yet another option, the core 1490 may be a special-purpose core, such as, for example, a network or communication core, compression engine, coprocessor core, general purpose computing graphics processing unit (GPGPU) core, graphics core, or the like.

The front-end unit circuitry 1430 may include branch prediction circuitry 1432 coupled to instruction cache circuitry 1434, which is coupled to an instruction translation lookaside buffer (TLB) 1436, which is coupled to instruction fetch circuitry 1438, which is coupled to decode circuitry 1440. In one example, the instruction cache circuitry 1434 is included in the memory unit circuitry 1470 rather than the front-end circuitry 1430. The decode circuitry 1440 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 1440 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 1440 may be implemented using various different mechanisms. Examples of suitable mechanisms include, but are not limited to, look-up tables, hardware implementations, programmable logic arrays (PLAs), microcode read only memories (ROMs), etc. In one example, the core 1490 includes a microcode ROM (not shown) or other medium that stores microcode for certain macroinstructions (e.g., in decode circuitry 1440 or otherwise within the front-end circuitry 1430). In one example, the decode circuitry 1440 includes a micro-operation (micro-op) or operation cache (not shown) to hold/cache decoded operations, micro-tags, or micro-operations generated during the decode or other stages of the processor pipeline 1400. The decode circuitry 1440 may be coupled to rename/allocator unit circuitry 1452 in the execution engine circuitry 1450.

The execution engine circuitry 1450 includes the rename/allocator unit circuitry 1452 coupled to retirement unit circuitry 1454 and a set of one or more scheduler(s) circuitry 1456. The scheduler(s) circuitry 1456 represents any number of different schedulers, including reservations stations, central instruction window, etc. In some examples, the scheduler(s) circuitry 1456 can include arithmetic logic unit (ALU) scheduler/scheduling circuitry, ALU queues, address generation unit (AGU) scheduler/scheduling circuitry, AGU queues, etc. The scheduler(s) circuitry 1456 is coupled to the physical register file(s) circuitry 1458. Each of the physical register file(s) circuitry 1458 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 1458 includes vector registers unit circuitry, writemask registers unit circuitry, and scalar register unit circuitry. These register units may provide architectural vector registers, vector mask registers, general-purpose registers, etc. The physical register file(s) circuitry 1458 is coupled to the retirement unit circuitry 1454 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 1454 and the physical register file(s) circuitry 1458 are coupled to the execution cluster(s) 1460. The execution cluster(s) 1460 includes a set of one or more execution unit(s) circuitry 1462 and a set of one or more memory access circuitry 1464. The execution unit(s) circuitry 1462 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 1456, physical register file(s) circuitry 1458, and execution cluster(s) 1460 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 1464). It should also be understood that where separate pipelines are used, one or more of these pipelines may be out-of-order issue/execution and the rest in-order.

In some examples, the execution engine unit circuitry 1450 may perform load store unit (LSU) address/data pipelining to an Advanced Microcontroller Bus (AMB) interface (not shown), and address phase and writeback, data phase load, store, and branches.

The set of memory access circuitry 1464 is coupled to the memory unit circuitry 1470, which includes data TLB circuitry 1472 coupled to data cache circuitry 1474 coupled to level 2 (L2) cache circuitry 1476. In one example, the memory access circuitry 1464 may include load unit circuitry, store address unit circuitry, and store data unit circuitry, each of which is coupled to the data TLB circuitry 1472 in the memory unit circuitry 1470. The instruction cache circuitry 1434 is further coupled to the level 2 (L2) cache circuitry 1476 in the memory unit circuitry 1470. In one example, the instruction cache 1434 and the data cache 1474 are combined into a single instruction and data cache (not shown) in L2 cache circuitry 1476, level 3 (L3) cache circuitry (not shown), and/or main memory. The L2 cache circuitry 1476 is coupled to one or more other levels of cache and eventually to a main memory.

The core 1490 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 1490 includes logic to support a packed data instruction set architecture extension (e.g., AVX1, AVX2), thereby allowing the operations used by many multimedia applications to be performed using packed data.

### Example Execution Unit(s) Circuitry.

FIG. 15 illustrates examples of execution unit(s) circuitry, such as execution unit(s) circuitry 1462 of FIG. 14(B). As illustrated, execution unit(s) circuity 1462 may include one or more ALU circuits 1501, optional vector/single instruction multiple data (SIMD) circuits 1503, load/store circuits 1505, branch/jump circuits 1507, and/or Floating-point unit (FPU) circuits 1509. ALU circuits 1501 perform integer arithmetic and/or Boolean operations. Vector/SIMD circuits 1503 perform vector/SIMD operations on packed data (such as SIMD/vector registers). Load/store circuits 1505 execute load and store instructions to load data from memory into registers or store from registers to memory. Load/store circuits 1505 may also generate addresses. Branch/jump circuits 1507 cause a branch or jump to a memory address depending on the instruction. FPU circuits 1509 perform floating-point arithmetic. The width of the execution unit(s) circuitry 1462 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

One or more aspects of at least one example may be implemented by representative instructions stored on a machine-readable medium which represents various logic within the processor, which when read by a machine causes the machine to fabricate logic to perform the techniques described herein. Such representations, known as "intellectual property (IP) cores" may be stored on a tangible, machine readable medium and supplied to various customers or manufacturing facilities to load into the fabrication machines that make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

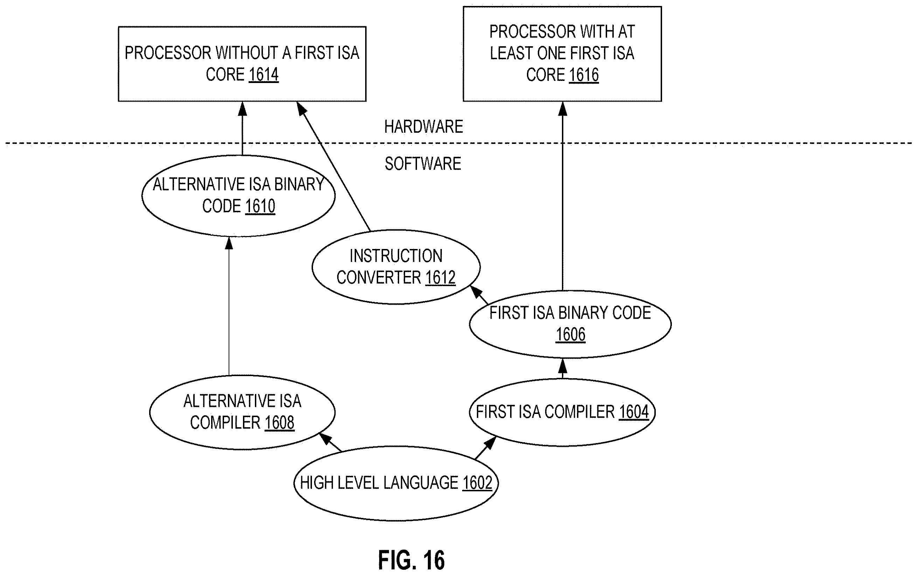

FIG. 16 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 16 shows a program in a high-level language 1602 may be compiled using a first ISA compiler 1604 to generate first ISA binary code 1606 that may be natively executed by a processor with at least one first ISA core 1616. The processor with at least one first ISA core 1616 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 1604 represents a compiler that is operable to generate first ISA binary code 1606 (e.g., object code) that can, with or without additional linkage processing, be executed on the processor with at least one first ISA core 1616. Similarly, FIG. 16 shows the program in the high-level language 1602 may be compiled using an alternative ISA compiler 1608 to generate alternative ISA binary code 1610 that may be natively executed by a processor without a first ISA core 1614. The instruction converter 1612 is used to convert the first ISA binary code 1606 into code that may be natively executed by the processor without a first ISA core 1614. This converted code is not necessarily to be the same as the alternative ISA binary code 1610; however, the converted code will accomplish the general operation and be made up of instructions from the alternative ISA. Thus, the instruction converter 1612 represents software, firmware, hardware, or a combination thereof that, through emulation, simulation, or any other process, allows a processor or other electronic device that does not have a first ISA processor or core to execute the first ISA binary code 1606.

References to "one example," "an example," "one embodiment," "an embodiment," etc., indicate that the example or embodiment described may include a particular feature, structure, or characteristic, but every example or embodiment may not necessarily include the particular feature, structure, or characteristic. Moreover, such phrases are not necessarily referring to the same example or embodiment. Further, when a particular feature, structure, or characteristic is described in connection with an example or embodiment, it is submitted that it is within the knowledge of one skilled in the art to affect such feature, structure, or characteristic in connection with other examples or embodiments whether or not explicitly described.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e., A and B, A and C, B and C, and A, B and C). As used in this specification and the claims and unless otherwise specified, the use of the ordinal adjectives "first," "second," "third," etc. to describe an element merely indicates that a particular instance of an element or different instances of like elements are being referred to and is not intended to imply that the elements so described must be in a particular sequence, either temporally, spatially, in ranking, or in any other manner. Also, as used in descriptions of embodiments, a "/" character between terms may mean that what is described may include or be implemented using, with, and/or according to the first term and/or the second term (and/or any other additional terms).

Also, the terms "bit," "flag," "field," "entry," "indicator," etc., may be used to describe any type or content of a storage location in a register, table, database, or other data structure, whether implemented in hardware or software, but are not meant to limit embodiments to any particular type of storage location or number of bits or other elements within any particular storage location. For example, the term "bit" may be used to refer to a bit position within a register and/or data stored or to be stored in that bit position. The term "clear" may be used to indicate storing or otherwise causing the logical value of zero to be stored in a storage location, and the term "set" may be used to indicate storing or otherwise causing the logical value of one, all ones, or some other specified value to be stored in a storage location; however, these terms are not meant to limit embodiments to any particular logical convention, as any logical convention may be used within embodiments.

In this specification and its drawings, the term "thread" and/or a block labeled "thread" may mean and/or represent an application, software thread, process, virtual machine, container, etc. that may be executed, run, processed, created, assigned, etc. on, by, and/or to a core.

The term "core" may mean any physical or logical processor or execution core, as described and/or illustrated in this specification and its drawings and/or as known in the art. For example, a physical core may support multiple logical cores by including hardware to separately execute different threads on different logical cores (e.g., hyperthreading).

The term "uncore" may mean any circuitry, logic, sub-systems, etc. (e.g., an integrated memory controller (iMC), power management unit, performance monitoring unit, system and/or I/O controllers, etc.) in/on a processor or system-on-chip (SoC) but not within a core, as described and/or illustrated in this specification and its drawings and/or as known in the art (e.g., by the name uncore, system agent, etc.).

However, use of the terms core and uncore in in the description and figures does not limit the location of any circuitry, hardware, structure, etc., as the location of circuitry, hardware, structure, etc. may vary in various embodiments. For example, in various embodiments, MSRs (or any set or subset of MSRs) may be within and/or accessible by a core (core-scoped) or within an uncore and/or accessible by more than one core (package-scoped).

The term "quality of service" (or QoS) may be used to mean or include any measure of quality of service mentioned in this specification and/or known in the art, to an individual thread, group of threads (including all threads), type of thread(s), including measures of and/or related to performance, predictability, etc.

The specification and drawings are, accordingly, to be regarded in an illustrative rather than a restrictive sense. It will, however, be evident that various modifications and changes may be made thereunto without departing from the scope of the disclosure as set forth in the claims.

## Claims

1. A method (700, 1100) comprising:
receiving settings for a region-aware memory bandwidth control feature in a processor (600, 900, 1215, 1238, 1270, 1280, 1300) having a processing core to execute a plurality of threads;
determining that use of memory bandwidth of one of a plurality of memory regions by a thread has reached a threshold (316, 318); and the method being **characterized in that** it comprises the step of
adjusting a rate corresponding to use of memory bandwidth by the thread, wherein the rate is a memory request issue rate of the thread to be adjusted to a most conservative rate of any rate indicated by any control loop (116A, 120A) corresponding to the thread.

2. The method (700, 1100) of claim 1, wherein one or more of the plurality of memory regions correspond to one or more of a plurality of types of memory or one or more of a plurality of ranges of memory.

3. The method (700, 1100) of claim 1, wherein determining is based on a linear rate meter operating based on a maximum bandwidth control window and a bandwidth control window, wherein the maximum bandwidth control window is to specify a leaky bucket counter window, and the bandwidth control window is to specify a number of times a leaky bucket count is to be decremented within the leaky bucket counter window.

4. A system (1200) comprising:
a system memory to be divided into a plurality of memory regions;
a processing core to execute a plurality of threads; the system being **characterized in that** it comprises a control circuitry to control use of memory bandwidth per memory region and per thread, and configured to adjust a rate corresponding to use of memory bandwidth by the thread, wherein the rate is a memory request issue rate of the thread to be adjusted to a most conservative rate of any rate indicated by any control loop (116A, 120A) corresponding to the thread.

5. The system (1200) of claim 4, wherein one or more of the plurality of memory regions correspond to one or more of a plurality of types of memory or one or more of a plurality of ranges of memory.

6. The system (1200) of claim 4 or 5, wherein the plurality of threads includes a first thread and a second thread; and
the control circuitry includes:
a first control loop to monitor the use by the first thread of memory bandwidth to a first memory region relative to a first target,
a second control loop to monitor use by the first thread of memory bandwidth to a second memory region relative to a second target,
a third control loop to monitor use by the second thread of memory bandwidth to the first memory region relative to a third target,
a fourth control loop to monitor use by the second thread memory bandwidth to the second memory region relative to a fourth target, and
rate control circuitry to adjust a memory request issue rate of the first thread based at least on the first and second control loops (116A, 120A) and to adjust a memory request issue rate of the second thread based at least on the third and fourth control loops (116A, 120A).

7. The system (1200) of claim 6, wherein the control circuitry includes at least one linear rate meter.

8. The system (1200) of claim 7, wherein the at least one linear rate meter is to operate based on a maximum bandwidth control window and a bandwidth control window, wherein the maximum bandwidth control window is to specify a leaky bucket counter window, and the bandwidth control window is to specify a number of times a leaky bucket count is to be decremented within the leaky bucket counter window.

9. The system (1200) of claim 8, wherein a first leaky bucket counter threshold (316, 318) value is to be used to indicate a memory request issue rate is to be increased.

10. The system (1200) of claim 8 or 9, wherein a second leaky bucket counter threshold (316, 318) value is to be used to indicate a corresponding memory request issue rate is to be decreased.

## Patentansprüche

1. Verfahren (700, 1100), umfassend:
Empfangen von Einstellungen für ein regionsbewusstes Speicherbandbreitensteuerungsmerkmal in einem Prozessor (600, 900, 1215, 1238, 1270, 1280, 1300) mit einem Verarbeitungskern zum Ausführen einer Mehrzahl von Threads;
Bestimmen, dass die Nutzung der Speicherbandbreite einer der Mehrzahl von Speicherregionen durch einen Thread einen Schwellenwert (316, 318) erreicht hat; und wobei das Verfahren **dadurch gekennzeichnet ist, dass** es den Schritt des Anpassens einer Rate umfasst, die der Nutzung der Speicherbandbreite durch den Thread entspricht, wobei die Rate eine Speicheranforderungsausgaberate des Threads ist, die an eine konservativste Rate aller Raten angepasst wird, die durch einen Regekreis (116A, 120A) angegeben werden, der dem Thread entspricht.

2. Verfahren (700, 1100) nach Anspruch 1, wobei eine oder mehrere der Mehrzahl von Speicherregionen einem oder mehreren einer Mehrzahl von Speichertypen oder einem oder mehreren einer Mehrzahl von Speicherbereichen entsprechen.

3. Verfahren (700, 1100) nach Anspruch 1, wobei das Bestimmen auf einem linearen Ratenmesser basiert, der basierend auf einem Maximalbandbreitensteuerungsfenster und einem Bandbreitensteuerungsfenster arbeitet, wobei das Maximalbandbreitensteuerungsfenster ein Leaky-Bucket-Zählerfenster spezifiziert und das Bandbreitensteuerungsfenster eine Anzahl von Malen spezifiziert, um die eine Leaky-Bucket-Zählung innerhalb Leaky-Bucket-Zählerfensters dekrementiert wird.

4. System (1200), umfassend:
einen Systemspeicher, der in eine Mehrzahl von Speicherregionen unterteilt ist;
einen Verarbeitungskern zum Ausführen einer Mehrzahl von Threads; wobei das System **dadurch gekennzeichnet ist, dass** es eine Steuerschaltungsanordnung zum Steuern der Nutzung von Speicherbandbreite pro Speicherregion und pro Thread umfasst und dazu ausgelegt ist, eine Rate anzupassen, die der Nutzung der Speicherbandbreite durch den Thread entspricht, wobei die Rate eine Speicheranforderungsausgaberate des Threads ist, die an eine konservativste Rate aller Raten angepasst wird, die durch einen Regelkreis (116A, 120A) angegeben werden, der dem Thread entspricht.

5. System (1200) nach Anspruch 4, wobei eine oder mehrere der Mehrzahl von Speicherregionen einem oder mehreren einer Mehrzahl von Speichertypen oder einem oder mehreren einer Mehrzahl von Speicherbereichen entsprechen.

6. System (1200) nach Anspruch 4 oder 5, wobei die Mehrzahl von Threads einen ersten und einen zweiten Thread umfasst; und
die Steuerschaltungsanordnung Folgendes aufweist:
einen ersten Regelkreis zum Überwachen der Nutzung der Speicherbandbreite durch den ersten Thread für eine erste Speicherregion relativ zu einem ersten Ziel,
einen zweiten Regelkreis zum Überwachen der Nutzung der Speicherbandbreite durch den ersten Thread für eine zweite Speicherregion relativ zu einem zweiten Ziel,
einen dritten Regelkreis zum Überwachen der Nutzung der Speicherbandbreite durch den zweiten Thread für die erste Speicherregion relativ zu einem dritten Ziel,
einen vierten Regelkreis zum Überwachen der Nutzung der Speicherbandbreite durch den zweiten Thread für die zweite Speicherregion relativ zu einem vierten Ziel und
eine Ratensteuerschaltungsanordnung zum Anpassen einer Speicheranforderungsausgaberate des ersten Threads zumindest basierend auf dem ersten und dem zweiten Regelkreis (116A, 120A) und zum Anpassen einer Speicheranforderungsausgaberate des zweiten Threads zumindest basierend auf dem dritten und dem vierten Regelkreis (116A, 120A).

7. System (1200) nach Anspruch 6, wobei die Steuerschaltungsanordnung mindestens einen linearen Ratenmesser umfasst.

8. System (1200) nach Anspruch 7, wobei der mindestens eine lineare Ratenmesser basierend auf einem Maximalbandbreitensteuerungsfenster und einem Bandbreitensteuerungsfenster arbeitet, wobei das Maximalbandbreitensteuerungsfenster ein Leaky-Bucket-Zählerfenster spezifiziert und das Bandbreitensteuerungsfenster eine Anzahl von Malen spezifiziert, um die eine Leaky-Bucket-Zählung innerhalb Leaky-Bucket-Zählerfensters dekrementiert wird.

9. System (1200) nach Anspruch 8, wobei ein erster Leaky-Bucket-Zählerschwellenwert (316, 318) verwendet wird, um anzugeben, dass eine Speicheranforderungsausgaberate erhöht wird.

10. System (1200) nach Anspruch 8 oder 9, wobei ein zweiter Leaky-Bucket-Zählerschwellenwert (316, 318) verwendet wird, um anzugeben, dass eine entsprechende Speicheranforderungsausgaberate verringert wird.

## Revendications

1. Procédé (700, 1100) comprenant :
la réception de réglages pour une caractéristique de commande de largeur de bande mémoire tenant compte de la zone dans un processeur (600, 900, 1215, 1238, 1270, 1280, 1300) pourvu d'un cœur de traitement destiné à exécuter une pluralité de threads ;
la détermination que l'utilisation de la largeur de bande mémoire de l'une d'une pluralité de zone de mémoire parmi une pluralité de zones mémoire par un thread a atteint un seuil (316, 318) ; et le procédé étant **caractérisé en ce qu'**il comprend l'étape d'ajustement d'un débit correspondant à l'utilisation de la largeur de bande mémoire par le thread, le débit étant un débit d'émission de requêtes mémoire du thread destiné à être ajusté au débit le plus modéré parmi tous les débits indiqués par toutes les boucles de commande (116A, 120A) correspondant au thread.

2. Procédé (700, 1100) selon la revendication 1, dans lequel une ou plusieurs de la pluralité de zones mémoire correspondent à un ou plusieurs d'une pluralité de types de mémoire ou à une ou plusieurs d'une pluralité de plages de mémoire.

3. Procédé (700, 1100) selon la revendication 1, dans lequel la détermination est basée sur un mesureur de débit linéaire fonctionnant sur la base d'une fenêtre maximale de commande de largeur de bande et d'une fenêtre de commande de largeur de bande, la fenêtre maximale de commande de largeur de bande étant destinée à spécifier une fenêtre de compteur à seau percé, et la fenêtre de commande de largeur de bande étant destinée à spécifier un nombre de fois où il convient de décrémenter un compte du seau percé au sein de la fenêtre de compteur à seau percé.

4. Système (1200) comprenant :
une mémoire système destinée à être divisée en une pluralité de zones mémoire ;
un cœur de traitement destiné à exécuter une pluralité de threads ; le système étant **caractérisé en ce qu'**il comprend une circuiterie de commande destinée à commander l'utilisation de la largeur de bande mémoire par zone mémoire et par thread, et configurée pour ajuster un débit correspondant à l'utilisation de la largeur de bande mémoire par le thread, le débit étant un débit d'émission de requêtes mémoire du thread destiné à être ajusté au débit le plus modéré parmi tous les débits indiqués par toutes les boucles de commande (116A, 120A) correspondant au thread.

5. Système (1200) selon la revendication 4, dans lequel une ou plusieurs de la pluralité de zones mémoire correspondent à un ou plusieurs d'une pluralité de types de mémoire ou à une ou plusieurs d'une pluralité de plages de mémoire.

6. Système (1200) selon la revendication 4 ou 5, dans lequel la pluralité de threads comporte un premier thread et un deuxième thread ; et
la circuiterie de commande comporte :
une première boucle de commande destinée à surveiller l'utilisation, par le premier thread, de la largeur de bande mémoire vers une première zone mémoire par rapport à une première cible,
une deuxième boucle de commande destinée à surveiller l'utilisation, par le premier thread, de la largeur de bande mémoire vers une deuxième zone mémoire par rapport à une deuxième cible,
une troisième boucle de commande destinée à surveiller l'utilisation, par le deuxième thread, de la largeur de bande mémoire vers la première zone mémoire par rapport à une troisième cible,
une quatrième boucle de commande destinée à surveiller l'utilisation, par le deuxième thread, de la largeur de bande mémoire vers la deuxième zone mémoire par rapport à une quatrième cible, et
une circuiterie de commande de débit destinée à ajuster un débit d'émission de requêtes mémoire du premier thread sur la base au moins des première et deuxième boucles de commande (116A, 120A) et à ajuster un débit d'émission de requêtes mémoire du deuxième thread sur la base au moins des troisième et quatrième boucles de commande (116A, 120A).

7. Système (1200) selon la revendication 6, dans lequel la circuiterie de commande comporte au moins un mesureur de débit linéaire.

8. Système (1200) selon la revendication 7, dans lequel l'au moins un mesureur de débit linéaire est destiné à fonctionner sur la base d'une fenêtre maximale de commande de largeur de bande et d'une fenêtre de commande de largeur de bande, la fenêtre maximale de commande de largeur de bande étant destinée à spécifier une fenêtre de compteur à seau percé, et la fenêtre de commande de largeur de bande étant destinée à spécifier un nombre de fois où il convient de décrémenter un compte du seau percé au sein de la fenêtre de compteur à seau percé.

9. Système (1200) selon la revendication 8, dans lequel une première valeur de seuil (316, 318) de compteur à seau percé est destinée à être utilisée pour indiquer qu'il convient d'augmenter un débit d'émission de requêtes mémoire.

10. Système (1200) selon la revendication 8 ou 9, dans lequel une deuxième valeur de seuil (316, 318) de compteur à seau percé est destinée à être utilisée pour indiquer qu'il convient de diminuer un débit d'émission de requêtes mémoire correspondant.
